# EUROPÄISCHE PATENTSCHRIFT

(11) **EP 2 095 651 B1**
(45) Veröffentlichungstag und Bekanntmachung des Hinweises auf die Patenterteilung: **10.05.2017**
(21) Anmeldenummer: 07819316.6
(22) Anmeldetag: 25.10.2007
(51) Int. Cl.: H04W 4/14

(54) **VERFAHREN ZUR ZUSTELLUNG EINER KURZNACHRICHT IN EINEM MOBILKOMMUNIKATIONSSYSTEM**
METHOD FOR DELIVERING A SHORT MESSAGE IN A MOBILE COMMUNICATIONS SYSTEM
PROCÉDÉ POUR DÉLIVRER UN MESSAGE COURT DANS UN SYSTÈME DE COMMUNICATION MOBILE

(30) Priorität: 26.10.2006 DE 102006051007
(43) Veröffentlichungstag der Anmeldung: 02.09.2009
(73) Patentinhaber: T-Mobile International AG, 53227 Bonn (DE)
(72) Erfinder: JESSEN, Peter, 53225 Bonn (DE); SÖHN, Martin, 56299 Ochtendung (DE)
(74) Vertreter: Riebling, Peter
(86) Internationale Anmeldenummer: PCT/EP2007/009265
(87) Internationale Veröffentlichungsnummer: WO 2008/049614

(56) Entgegenhaltungen:
- WO-A-98/56195
- WO-A-99/63772
- GB-A- 2 376 154

## Beschreibung

Die Erfindung betrifft ein Verfahren zur Zustellung einer Kurznachricht in einem Mobilkommunikationssystem nach den Merkmalen des Oberbegriffs des Anspruchs 1.

In der Signalisierungsebene der Protokollarchitektur eines digitalen GSM-Mobilkommunikationssystems können von und zur Mobilstation (MS) paketorientierte Nutzdaten transportiert werden. Eine Möglichkeit bietet der Punkt-zu-Punkt-Kurznachrichtendienst SMS (Short Message Service).

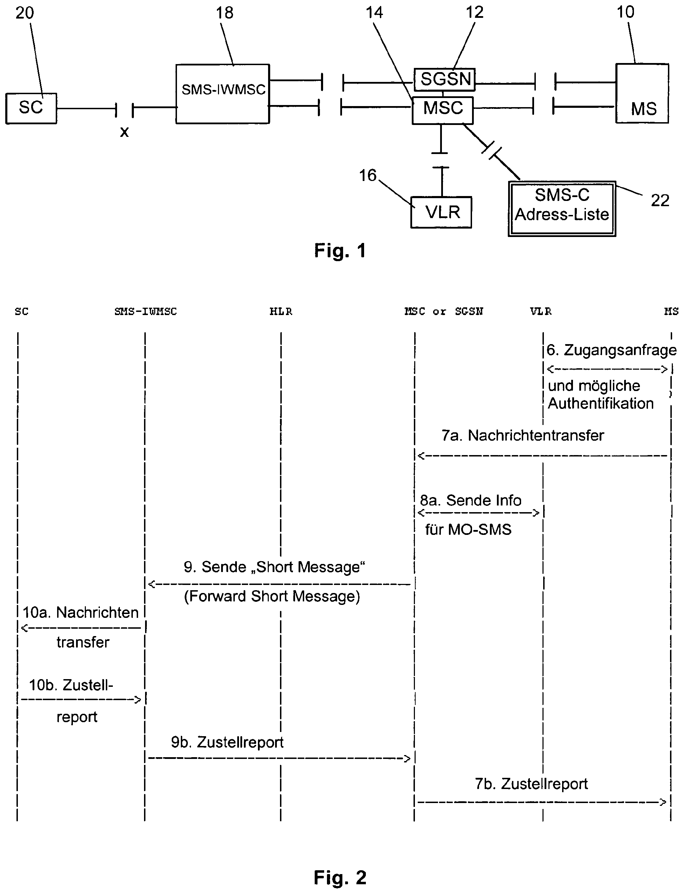

Figur 1 zeigt schematisch die Einrichtungen eines GSM Mobilkommunikationsnetzes zur Durchführung eines SMS Kurznachrichtendienstes. Die Kurznachrichten werden über ein SMS-Service Center 20 (SMS-SC meistens auch nur als SC oder SMS-C bezeichnet für Short Message Service Center) im store-and-forward-Betrieb transportiert. Dieses SMS-C 20 nimmt die Kurznachrichten von einer Mobilstation, MS, 10 entgegen und leitet sie zum entsprechenden Empfänger weiter. Das SMS-C 20 transportiert die Kurznachrichten innerhalb des GSM-Netzes über SS7 zum Mobilteilnehmer, besitzt aber im Allgemeinen auch TCP/IP-Verbindungsmöglichkeiten mit dem Internet, so dass SMS auch per Internet an das SMS-C 20 geschickt werden können. Für die Zustellung einer Short Message Mobile Originating (SMS-MO) von einer Mobilstation 10 zu anderen Teilnehmern (Mobilfunk, Festnetz) wird das SMS-C 20 mittels einer SMS-C Adresse im Mobilfunknetz adressiert.

Die SMS-C Adresse ist im Mobilfunkgerät 10 gespeichert. Diese SMS-C Adresse wird bei einer SMS-MO vom Mobilfunkgerät 10 zur zuständigen Mobilvermittlungsstelle 14 (Mobile Switching Center: MSC) übermittelt. Kurznachrichten können auch über eine GPRS Vermittlungsstelle, SGSN, 12 geroutet werden. In der MSC 14 wird die SMS-MO anhand der SMS-C Adresse zum SMS-C 20 geroutet. Falls die SMS-C Adresse im Mobilfunkgerät 10 nicht richtig konfiguriert ist, kann die MSC 14 das SMS-C 20 nicht adressieren oder die SMS kommt beim SMS-C 20 an und es wird dort festgestellt, dass die gesendete SMS-C Adresse nicht mit der realen SMS-C Adresse übereinstimmt. In beiden Fällen kann die SMS-MO nicht erfolgreich zugestellt werden.

Das SMS-C ist in der Regel mit einer SMS-Netzübergangsvermittlungsstelle 18 gekoppelt. Solche Netzübergangskomponenten sind z. B. das SMS-Gateway-MSC (SMS-GMSC) für die Downlinkrichtung (SMS zur Mobilstation) oder das SMS-Interworking-MSC 18 (SMS-IWMSC) für die Uplinkrichtung (SMS von der Mobilstation). Innerhalb des GSM-Netzes wird eine SMS zwischen den MSCs über die MAP-Schnittstelle (Mobile Application Part) und die darunter liegenden Verbindungen des SS7 (SignalisierungsSystem Nr. 7) weitergeleitet.

Der Dienst Short Message Service wird unter anderem mit den Spezifikationen 3GPP TS 23.040: "Technical Realization of the Short Message Service (SMS)", und 3GPP TS 29.002: "Mobile Application Part (MAP)" beschrieben.

WO 99/63772 A1 offenbart ein Verfahren zur Zustellung einer Kurznachricht in einem Mobilkommunikationssystem, bei dem die von einer Mobilstation abgesendete Kurznachricht von einem SMS-Service-Center entgegengenommen und zu einem entsprechenden Empfänger weitergeleitet wird. Das SMS-C wird mittels einer SMS-C Adresse im Mobilkommunikationssystem adressiert wird, wobei eine nicht zustellbare Kurznachricht erkannt und an den Absender zurückgesendet wird.

GB 2 376 154 A offenbart ein Kurznachrichtensystem, bei dem eine Kurznachricht mittels einer virtuellen Adresse zunächst an einen virtuellen Nachrichtenserver gesendet wird. Dort wird geprüft, ob der Absender zum Senden der Kurznachricht berechtigt ist. In der Vermittlungsstelle ist ein Adressenumsetzer angeordnet, der bei positiver Berechtigung des Absenders die virtuelle Adresse in eine reale Adresse eines realen Nachrichtenservers übersetzt und die Kurznachricht weiterleitet.

Bei beiden Verfahren kann die Kurznachricht jedoch nicht zugestellt werden, falls die Adresse des Nachrichtenservers falsch angegeben oder nicht korrekt konfiguriert ist.

Es ist die Aufgabe der Erfindung, ein Verfahren anzugeben, das auch bei einer falsch konfigurierter SMS-C Adresse in der Mobilstation eine korrekte Zustellung einer Kurznachricht (SMS-MO) erlaubt.

Diese Aufgabe wird erfindungsgemäß durch die Merkmale des unabhängigen Anspruchs gelöst.

Bevorzugte Ausgestaltungen und weitere vorteilhafte Merkmale der Erfindung sind in den abhängigen Ansprüchen angegeben.

Es ist ein Verfahren zur Zustellung einer Kurznachricht in einem Mobilkommunikationssystem beschrieben, bei dem die von einer Mobilstation abgesendete Kurznachricht von einem SMS-Service-Center, SMS-C, entgegengenommen und zu einem entsprechenden Empfänger weitergeleitet wird, wobei das SMS-C mittels einer SMS-C Adresse im Mobilkommunikationssystem adressiert wird.
Erfindungsgemäß wird eine als fehlerhaft erkannte SMS-C Adresse seitens des Mobilkommunikationssystems korrigiert, wonach die Zustellung der Kurznachricht mit der korrigierten SMS-C Adresse fortgesetzt wird.

Das erfindungsgemäße Verfahren umfasst zwei bevorzugte Ausgestaltungen.

In einer ersten Ausgestaltung der Erfindung erfolgt eine Prüfung und gegebenenfalls eine Korrektur einer als fehlerhaft erkannten SMS-C Adresse in der Mobilvermittlungsstelle MSC vor dem Weiterleiten der Kurznachricht SMS an das SMS-C. Die Korrektur der Adresse erfolgt anhand einer Adress-Liste (Tabelle), in der eine Reihe von "gültigen" SMS-C Adressen gespeichert sind. Die Adress-Liste kann in der MSC vorgehalten werden oder in einer an die MSC angebundenen Datenbasis.

In einer zweiten Ausgestaltung der Erfindung erfolgt eine Korrektur der SMS-C Adresse erst nach einer Abweisung einer SMS-MO durch MSC oder SMS-C. Daraufhin erfolgt ein erneutes Versenden der Kurznachricht SMS mit korrigierter SMC-C Adresse.

Bei beiden Verfahren wird die SMS-MO Zustellung bei fehlerhafter SMS-C Adresse durch eine voreingestellte SMS-C Adresse (default SMS-C Adresse) gewährleistet. Dadurch wird die Erfolgsrate des Dienstes SMS für den Mobilfunkkunden erhöht.

Ausführungsbeispiele der Erfindung werden nachfolgend anhand der Zeichnungen näher beschrieben.
Figur 1 zeigt schematisch die Netzkomponenten eines Mobilkommunikationssystems, die bei der Kurznachrichtenübertragung eingesetzt werden.
Figur 2 zeigt den Nachrichtenverlauf zwischen den in Figur 1 gezeigten Netzkomponenten bei einer erfolgreichen Zustellung einer Kurznachricht.
Figur 3 zeigt den Nachrichtenverlauf zwischen den Netzkomponenten bei einem auftretenden Fehler in der Mobilvermittlung MSC oder dem Netzknoten SGSN.
Figur 4 zeigt den Nachrichtenverlauf zwischen den beteiligten Netzelementen bei einem auftretenden Fehler in der Übergangsvermittlungsstelle.
Figur 5 zeigt den Nachrichtenverlauf zwischen den beteiligten Netzelementen bei einem auftretenden Fehler in der Kurznachrichtenzentrale SMS-C.

Die bei der Zustellung einer Kurznachricht in einem Mobilkommunikationssystem erforderlichen Netzelemente wurden bereits im einleitenden Teil der Beschreibung mit Bezug auf Figur 1 erläutert.

Figur 2 beschreibt den Fall einer erfolgreichen Zustellung einer Kurznachricht und zeigt den Nachrichtenaustausch zwischen den beteiligten Netzelementen auf. Gemäß dem Schritt 6 erfolgt zunächst seitens der Mobilstation MS eine Zugangsanfrage beim Besucherregister VLR des Mobilfunknetzes und eine mögliche Authentifizierungsprozedur zur Authentifizierung der Mobilstation gegenüber dem Netz. Wurden diese Prozeduren erfolgreich abgeschlossen, kann die Mobilstation MS eine Kurznachricht an einen vorbestimmten Empfänger versenden. Die Kurznachricht wird zunächst an die zuständige Vermittlungsstelle MSC bzw. SGSN (Schritt 7a) übermittelt. In Schritt 8a erfolgt eine Kommunikation zwischen der Vermittlungsstelle und dem Besucherregister VLR zwecks entsprechender Informationen für die Zustellung der Kurznachricht. In Schritt 9 wird nun die Kurznachricht von der Vermittlungsstelle MSC bzw. SGSN an eine Übergangsvermittlungsstelle SMS-IWMSC gesendet und von dieser weiter in Schritt 10a an die Kurznachrichtenzentrale (Schritt 10a). In Schritt 10b bestätigt die Kurznachrichtenzentrale den Empfang der Kurznachricht, wobei die Bestätigungsnachricht über die Vermittlungsstellen an die sendende Mobilstation zurückgegeben wird, wie die Schritte 9b und 7b zeigen.

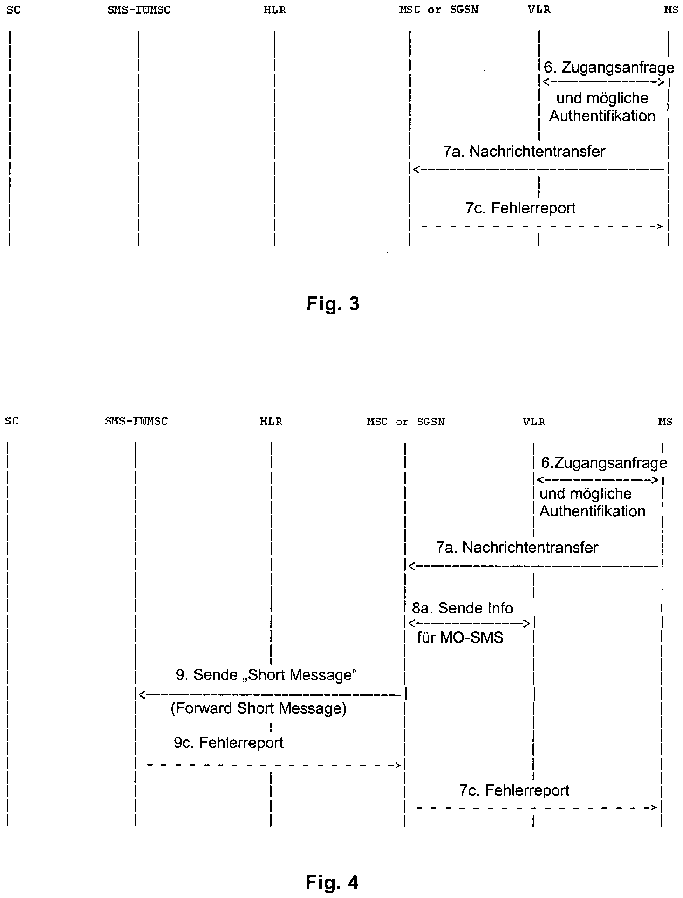

Figur 3 zeigt den Nachrichtenverlauf einer fehlerhaften Zustellung einer Kurznachricht. Die die Schritte 6 und 7a werden zunächst gleich durchgeführt, wie im Zusammenhang mit Figur 2 beschrieben. Allerdings wird angenommen, dass die Mobilstation MS hier eine fehlerhafte oder unzulässige SMS-C-Adresse verwendet, die in der Mobilvermittlungsstelle MSC als fehlerhaft erkannt wird, so dass eine Weiterleitung an ein SMS-C nicht möglich ist. Die Mobilvermittlungsstelle MSC sendet daraufhin einen Fehlerreport 7c an die sendende Mobilstation zurück.

Figur 4 zeigt ein weiteres Beispiel eines möglichen Fehlerfalls bei der Zustellung einer Kurznachricht. Die Schritte 6, 7a, 8a und 9 werden wie im Zusammenhang mit Figur 2 beschrieben durchgeführt. Es wird angenommen, dass die Mobilstation MS eine fehlerhafte oder unzulässige SMS-C-Adresse verwendet. Die Übergangsvermittlungsstelle SMS-IWMSC erkennt jedoch die fehlerhafte oder ungültige SMS-C Adresse und sendet als Antwort einen Fehlerreport 9c zurück an die zuständige Vermittlungsstelle MSC bzw. SGSN. Dieser Fehlerreport wird von der MSC als Fehlerreport 7c an die Mobilstation zurückgegeben.

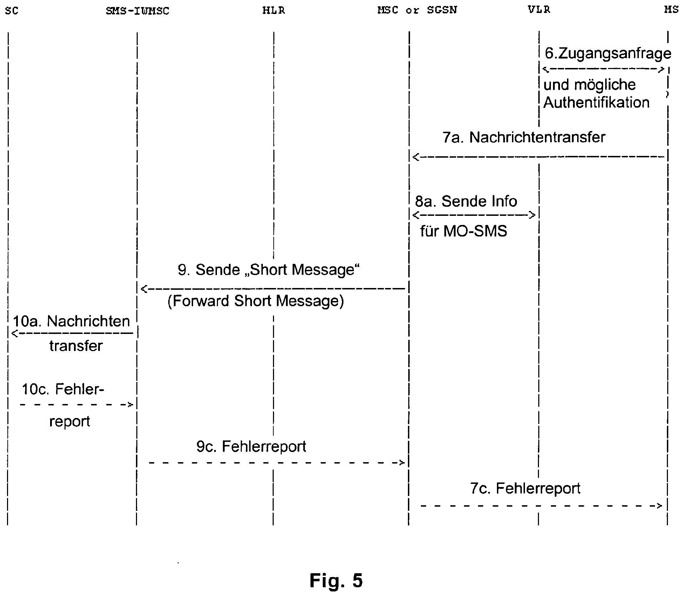

Figur 5 zeigt einen weiteren möglichen Fehlerfall bei der Zustellung einer Kurznachricht. Die Schritte 6, 7a, 8a, 9 und 10a entsprechen den in Figur 2 beschriebenen Schritten bei der Zustellung der Kurznachricht bis in die Kurznachrichtenzentrale SC. Die Kurznachrichtenzentrale erkennt jedoch eine fehlerhafte Adressierung anhand der SMS-C Adresse und sendet über die Vermittlungsstelle SMS-IWMSC, die Vermittlung MCS bzw. SGSN einen Fehlerreport an die Mobilstation (Schritte 10c, 9c und 7c).

In all den oben beschriebenen Fällen eines Fehlers bei der Zustellung einer Kurznachricht kann das erfindungsgemäße Verfahren Abhilfe schaffen, wie nachfolgend beschrieben wird:

In einer ersten Ausgestaltung der Erfindung erfolgt eine Prüfung und ggf. eine Korrektur einer fehlerhaften oder unzulässigen SMS-C Adresse in der MSC 14 vor dem Versenden einer SMS an das SMS-C 20. Die Korrektur der SMS-C Adresse erfolgt mittels einer Adress-Liste in Form einer Tabelle 22 mit gültigen SMS-C Adressen, auf welche die MSC 14 zugreifen kann. Wie aus Figur 1 zu entnehmen, kann die Adress-Liste 22 ist in der MSC 14 oder dem SGSN 12 gespeichert oder als eigenständige Datenbasis an die MSC 14 oder den GSGN 12 angebunden sein.

In der MSC 14 werden die gültigen SMS-C Adressen in der Tabelle 22 eingetragen. Der erste Eintrag in dieser Tabelle 22 entspricht einer voreingestellten "default" SMS-C Adresse.

Beispiel für die SMS-C Adressen Liste in der MSC:

| **MSC SMS-C Adressen Liste** | |
|---|---|
| SMS-C Adr 0 *) | 491710760000 |
| SMC-C Adr 1 | 491710770000 |
| SMS-C Adr 2 | 491700750000 |
| ... | |
| SMS-C Adr X | 491700740000 |

| | |
|---|---|
| *) Der erste gültige Eintrag entspricht der voreingestellten "default" SMS-C Adresse, z. B. 491710760000. | |

Protokoll 1 zeigt einen Auszug aus der einer Forward SM Nachricht zwischen der MSC 14 und der SMS-C 20, wobei die für die Erfindung relevanten Parameter fett hervorgehoben sind. Die Fußnoten ^{1),2),3),4),5)} beziehen sich auf Nachrichten und Parameter der nachfolgenden SMS-MO Signalisierung.

In der Nachricht "Forward SM" ¹⁾ wird vom Netzbetreiber in der Mobilteilnehmerkennung Parameter "IMSI" ²⁾ überprüft, ob es sich um einen Teilnehmer des eigenen Mobilfunknetzes handelt. Das kann anhand der in der IMSI enthaltenen Parameter MCC (Mobile Country Code) und MNC (Mobile Network Code) geprüft werden. Bei einem Teilnehmer des deutschen D1-Netzes (T-Mobile) müssen der "MCC" und der "MNC" ³⁾ der IMSI beispielsweise den Ziffern 262 01 entsprechen. Falls festgestellt wird, dass es sich nicht um einen Teilnehmer des eigenen Netzes handelt, sondern z. B. um einen Roaming-Teilnehmer, wird nicht in die normale SMS Signalisierung eingegriffen.

Falls es sich um einen eigenen Teilnehmer handelt, das heißt "MCC" und "MNC" ³⁾ in dem Parameter "IMSI" ²⁾ der "Forward SM" ¹⁾ Nachricht entspricht 262 01, wird die in der Nachricht vorhandene SMS-C Adresse "SC DA Address Signals" ⁴⁾ aus dem Parameter "Service Centre Addr DA" ⁵⁾ der Nachricht "Forward SM"¹⁾ mit der SMS-C Adressen Liste 22 in der MSC 14 verglichen.

Ist die SMS-C Adresse "SC DA Address Signals' ³⁾ in der MSC SMS-C Adressen Liste 22 vorhanden, so wird die SMS mit der ursprünglichen Adresse von der MSC 14 zum über die SMS-IWMSC 18 zum SMS-C 20 weitergeleitet.

Ist die SMS-C Adresse "SC DA Address Signals" ³⁾ des SMC-C nicht in der SMS-C Adressen Liste 22 enthalten, so wird diese falsche bzw. fehlerhafte SMS-C Adresse von der MSC 14 durch den ersten Eintrag der MSC SMS-C Adressen Liste 22 ersetzt und die SMS mit dieser korrigierten (default) SMS-C Adresse "SC DA Address Signals" ³⁾ zum SMC-C 20 gesendet.

### Protokoll 1:

### Auszug aus der Forward SM Nachricht mit den relevanten Parametern:

| | | |
|---|---|---|
| **B96*** | Data | 62 5e 48 04 fa 04 6e e5 6b 1a 28... |
| 3GPP 29.002 (MAP) Version 4.8.0 (MAP) BEG (= Begin) | | |
| Begin | | |
| 01100010 | Tag | (APPL C [2]) |
| 01011110 | Length | 94 |
| 1 Origination Transaction ID | | |
| 01001000 | Tag | (APPL P [8]) |
| 00000100 | Length | 4 |
| ***B4*** | Orig Trans ID | 4194594533 |
| 2 Dialogue Portion | | |
| 01101011 | Tag | (APPL C [11]) |
| 00011010 | Length | 26 |
| 2.1 DialogueExternal | | |
| 00101000 | Tag | (UNIV C External) |
| 00011000 | Length | 24 |
| 2.1.1 DialogueObjectID | | |
| 00000110 | Tag | (UNIV P Obj Identifier) |
| 00000111 | Length | 7 |
| 00000000 | Authority | CCITT Recommendation |
| 00010001 | Name Form | q |
| 10000110 | Rec Number | 7 |
| 00000101 | Rec Number | 73 |
| 00000001 | AS | 1 |
| 00000001 | Dialog-AS | Dialogue PDU |
| 00000001 | Version | 1 |
| 2.1.2 DialoguesingleASN1 | | |
| 10100000 | Tag | (CONT C [0]) |
| 00001101 | Length | 13 |
| 2.1.2.1 DialogueRequest | | |
| 01100000 | Tag | (APPL C [0]) |
| 00001011 | Length | 11 |
| 2.1.2.1.1 Application Context Name | | |
| 10100001 | Tag | (CONT C [1]) |
| 00001001 | Length | 9 |
| 2.1.2.1.1.1 ACN Object Id | | |
| 00000110 | Tag | (UNIV P Obj Identifier) |
| 00000111 | Length | 7 |
| 0000---- | ObjId | CCITT |
| ----0100 | Organization | Identified-organization |
| 00000000 | | ETSI |
| 00000000 | Domain | Mobile Domain |
| 00000001 | Mobile Subdomain | GSM-Network |
| 00000000 | Common Component ID | AC-ID |
| 00010101 | Application Context | Short Msg MO-Relay |
| 00000011 | Version | Version3 |
| 3 Component Portion | | |
| 01101100 | Tag | (APPL C [12]) |
| 00111010 | Length | 58 |
| 3.1 Invoke | | |
| 10100001 | Tag | (CONT C [1]) |
| 00111000 | Length | 56 |
| 3.1.1 Invoke ID | | |
| 00000010 | Tag | (UNIV P Integer) |
| 00000001 | Length | 1 |
| 00000001 | Invoke ID value | 1 |
| 3.1.2 Local Operation | | |
| 00000010 | Tag | (UNIV P Integer) |
| 00000001 | Length | 1 |
| 00101110 | Operation Code | Forward SM 1) |
| 3.1.3 Parameter Sequence | | |
| 00110000 | Tag | (UNIV C Sequence (of)) |
| 00110000 | Length | 48 |
| 3.1.3.1 Service Centre Addr DA 5) | | |
| 10000100 | Tag | (CONT P [4]) |
| 00000111 | Length | 7 |
| 1------- | Extension Indicator | No Extension |
| -001---- | Nature of Address | International number |
| ----0001 | Numbering Plan Indicator | ISDN/Telephony No plan (E.164) |
| *****B6***** | **SC DA Address Signals 4)** | **'491700750000'** |
| 3.1.3.2 MSISDN | | |
| 10000010 | Tag | (CONT P [2]) |
| 00000111 | Length | 7 |
| 1 ------- | Extension Indicator | No Extension |
| -001---- | Nature of Address | International number |
| ----0001 | Numbering Plan Indicator | ISDN/Telephony No plan (E.164) |
| ***B6*** | MS ISDN Address Signals | '491715932xxx' |
| 3.1.3.3 SM RP UI | | |
| 00000100 | Tag | (UNIV P OctetString) |
| 00010010 | Length | 18 |
| **B18*** | SM RP UI | 35 2e 0c 91 94 71 21 60 61 79 00.. |
| 3.1.3.4 IMSI 2) | | |
| 00000100 | Tag | (UNIV P OctetString) |
| 00001000 | Length | 8 |
| ****b60***** | **MCC + MNC + MSIN 3)** | **'262011949000042'** |
| 1111---- | FILLER | 15 |
| P-GSM 03.40 (SMTP) Version 3.5.0 (SMTP) SMSB (= SMS-SU BMIT) | | |
| SMS-SUBMIT | | |
| -------1 | Message type indicator | 1 |
| -----10- | Spare | - unknown / undefined - |
| ---10--- | Validity Period format | TP-VP present, integer |
| 001----- | Spare | - unknown / undefined - |
| Message Reference | | |
| 00101110 | TP-Message Reference | 46 |
| Destination Address | | |
| 00001100 | Address Length | 12 |
| ----0001 | Number plan | ISDN/telephony numbering plan |
| -001---- | Type of number | International number |
| 1------- | Extension bit | No Extension |
| ***B6*** | Destination Address | '491712061xxx' |
| Protocol Identifier | | |
| ---00000 | SM-AL protocol | 0 |
| --0----- | Telematic interworking | No interwork, SME-to-SME prot |
| 00------ | Spare | 0 |
| Data Coding Scheme | | |
| 00000000 | TP-Data-Coding Scheme | 0 |
| Validity Period | | |
| 10100111 | Validity Period | 167 |
| TP-User-Data | | |
| 00000100 | User Data Length | 4 |
| ***B4*** | User Data | "Test" |

Gemäß einer abgewandelten Ausgestaltung der Erfindung erfolgt eine Korrektur einer falschen oder fehlerhaften SMS-S Adresse erst nach einer Abweisung durch die MSC 14 oder das SMS-C 20. Darauf folgend erfolgt erneutes Senden der SMS mit korrigierter SMC-S Adresse.

Protokoll 2 zeigt einen Auszug aus der einer Forward SM Nachricht zwischen der MSC 14 und der SMS-C mit den für die Erfindung relevanten Parametern. Die Fußnoten ^{1),2),3),4),5),6)} beziehen sich auf Nachrichten und Parameter der folgenden SMS-MO Signalisierung.

In der MSC 14 wird eine voreingestellte "default" SMS-C Adresse eingetragen.

Es wird angenommen, dass die MSC 14 die "Forward SM" ¹⁾ Nachricht mit einer falschen SMC-C Adresse "SC DA Address Signals" ²⁾ zum SMS-C 20 sendet. Die MSC 14 kann die SMS aufgrund einer falschen SMS-C Adresse nicht zum SMS-C 20 routen oder das SMS-C 20 erkennt anhand der SMS-C Adresse "SC DA Address Signals" ²⁾, dass die SMS-C Adresse nicht korrekt ist. Das MSC 14 oder das SMS-C beantworten die "Forward SM" ¹⁾ Nachricht mit einem Fehlercode "error code" ³⁾.

Dieser Fehlercode "error code" ³⁾ kann z. B. wie folgt sein:
- System Failure (Systemfehler)
- Unknown SC Adress (Unbekannte SC Adresse)
- Network out of order (Netzwerk außer Betrieb)

Diese Fehlercodes "error code" ³⁾ sind teilweise abhängig von den MSC bzw. den SMS-C Implementierungen der Gerätehersteller.

Wird einer dieser oder ein anderer Fehlercode "error code" ³⁾ zur MSC 14 zurückgesendet, so sendet die MSC 14 eine neue, wie folgt korrigierte "Forward SM" ¹⁾ zum SMS-C:

In der Nachricht "Forward SM" ¹⁾ wird in dem Parameter "IMSI" ⁴⁾ überprüft, ob es sich um einen Teilnehmer des eigenen Netzes des Netzbetreibers handelt. Bei einem Teilnehmer des deutschen D1-Netzes (T-Mobile) müssen der "MCC" und der "MNC" ³⁾ der IMSI beispielsweise den Ziffern 262 01 entsprechen. Falls festgestellt wird, dass es sich nicht um einen Teilnehmer des eigenen Netzes handelt, sondern z. B. um einen Roaming-Teilnehmer, wird keine korrigierte "Forward SM" ¹⁾ Nachricht zum SMS-C gesendet.

Falls es sich um einen eigenen Teilnehmer handelt, das heißt "MCC und MNC" ⁵⁾ in dem Parameter "IMSI" ⁴⁾ der "Forward SM" ¹⁾ Nachricht entspricht 262 01, wird die SMS-C Adresse "SC DA Address Signals" 2) aus dem Parameter "Service Centre Addr DA" ⁶⁾ der Nachricht "Forward SM" ¹⁾ mit der in der MSC festgelegten "default" SMC-C Adresse überschrieben. Diese korrigierte "Forward SM" ¹⁾ Nachricht wird nochmals zum SMS-C 20 gesendet.

Das MSC 14 setzt einen Merker für diese SMS Transaktion.

Falls erneut die bereits korrigierte "Forward SM" ¹⁾ mit einem Fehlercode "error code" ³⁾ beantwortet wird, so erfolgt bei einem gesetzten Merker keine weitere Korrektur der SMS-C Adresse "SC DA Address Signals" ²⁾ und kein erneutes Senden der "Forward SM" ¹⁾ Nachricht zum SMS-C 20. Danach wird der Merker in der MSC 14 für diese SMS Transaktion zurückgesetzt.

### Protokoll 2:

### Auszug aus der Forward SM Nachricht mir den relevanten Parametern:

**Nachricht mit der falschen SMS-C Adresse**

| | | |
|---|---|---|
| 3GPP 29.002 (MAP) Version 4.8.0 (MAP) BEG (= Begin) | | |
| Begin | | |
| 01100010 | Tag | (APPL C [2]) |
| 01100000 | Length | 96 |
| 1 Origination Transaction ID | | |
| 01001000 | Tag | (APPL P [8]) |
| 00000100 | Length | 4 |
| ***B4*** | Orig Trans ID | 4194609381 |
| 2 DialoguePortion | | |
| 01101011 | Tag | (APPL C [11]) |
| 00011010 | Length | 26 |
| 2.1 DialogueExternal | | |
| 00101000 | Tag | (UNIV C External) |
| 00011000 | Length | 24 |
| 2.1.1 DialogueObjectID | | |
| 00000110 | Tag | (UNIV P Obj Identifier) |
| 00000111 | Length | 7 |
| 00000000 | Authority | CCITT Recommendation |
| 00010001 | Name Form | q |
| 10000110 | Rec Number | 7 |
| 00000101 | Rec Number | 73 |
| 00000001 | AS | 1 |
| 00000001 | Dialog-AS | Dialogue PDU |
| 00000001 | Version | 1 |
| 2.1.2 DialoguesingleASN1 | | |
| 10100000 | Tag | (CONT C [0]) |
| 00001101 | Length | 13 |
| 2.1.2.1 DialogueRequest | | |
| 01100000 | Tag | (APPL C [0]) |
| 00001011 | Length | 11 |
| 2.1.2.1.1 Application Context Name | | |
| 10100001 | Tag | (CONT C [1]) |
| 00001001 | Length | 9 |
| 2.1.2.1.1.1 ACN Object Id | | |
| 00000110 | Tag | (UNIV P Obj Identifier) |
| 00000111 | Length | 7 |
| 0000---- | ObjId | CCITT |
| ----0100 | Organization | Identified-organization |
| 00000000 | | ETSI |
| 00000000 | Domain | Mobile Domain |
| 00000001 | Mobile Subdomain | GSM-Network |
| 00000000 | Common Component ID | AC-ID |
| 00010101 | Application Context | Short Msg MO-Relay |
| 00000011 | Version | Version3 |
| 3 Component Portion | | |
| 01101100 | Tag | (APPL C [12]) |
| 00111100 | Length | 60 |
| 3.1 Invoke | | |
| 10100001 | Tag | (CONT C [1]) |
| 00111010 | Length | 58 |
| 3.1.1 Invoke ID | | |
| 00000010 | Tag | (UNIV P Integer) |
| 00000001 | Length | 1 |
| 00000001 | Invoke ID value | 1 |
| 3.1.2 Local Operation | | |
| 00000010 | Tag | (UNIV P Integer) |
| 00000001 | Length | 1 |
| 00101110 | Operation Code | Forward SM 1) |
| 3.1.3 Parameter Sequence | | |
| 00110000 | Tag | (UNIV C Sequence (of)) |
| 00110010 | Length | 50 |
| 3.1.3.1 Service Centre Addr DA 6) | | |
| 10000100 | Tag | (CONT P [4]) |
| 00000111 | Length | 7 |
| 1------- | Extension Indicator | No Extension |
| -001---- | Nature of Address | International number |
| ----0001 | Numbering Plan Indicator | ISDN/Telephony No plan (E.164) |
| *****B6***** | **SC DA Address Signals 2)** | **'420603052000'** |
| 3.1.3.2 MSISDN | | |
| 10000010 | Tag | (CONT P [2]) |
| 00000111 | Length | 7 |
| 1------- | Extension Indicator | No Extension |
| -001---- | Nature of Address | International number |
| ----0001 | Numbering Plan Indicator | ISDN/Telephony No plan (E.164) |
| ***B6*** | MS ISDN Address Signals | '491715932542' |
| 3.1.3.3 SM RP UI | | |
| 00000100 | Tag | (UNIV P OctetString) |
| 00010100 | Length | 20 |
| **B20*** | SM RP UI | 35 32 0c 91 94 71 21 60 61 79 00... |
| 3.1.3.4 IMSI 4) | | |
| 00000100 | Tag | (UNIV P OctetString) |
| 00001000 | Length | 8 |
| ****b60***** | **MCC + MNC + MSIN 5)** | **'262011949000042'** |
| 1111---- | FILLER | 15 |
| P-GSM 03.40 (SMTP) Version 3.5.0 (SMTP) SMSB (= SMS-SUBMIT) | | |
| SMS-SUBMIT | | |
| -------1 | Message type indicator | 1 |
| -----10- | Spare | - unknown / undefined - |
| ---10--- | Validity Period format | TP-VP present, integer |
| 001----- | Spare | - unknown / undefined - |
| Message Reference | | |
| 00110010 | TP-Message Reference | 50 |
| Destination Address | | |
| 00001100 | Address Length | 12 |
| ----0001 | Number plan | ISDN/telephony numbering plan |
| -001---- | Type of number | International number |
| 1 ------- | Extension bit | No Extension |
| ***B6*** | Destination Address | '491712061697' |
| Protocol Identifier | | |
| ---00000 | SM-AL protocol | 0 |
| --0----- | Telematic interworking | No interwork, SME-to-SME prot |
| 00------ | Spare | 0 |
| Data Coding Scheme | | |
| 00000000 | TP-Data-Coding Scheme | 0 |
| Validity Period | | |
| 10100111 | Validity Period | 167 |
| TP-User-Data | | |
| 00000110 | User Data Length | 6 |
| ***B6*** | User Data | "Test 3" |

### Fehlerreport ("Return error code") von der MSC oder dem SMS-C

| | | |
|---|---|---|
| ITU-T WHITE BOOK SCCP (SCCP) UDT (= Unitdata) | | |
| Unitdata | | |
| 1010---- | Signalling 3Link Selection | 10 |
| 00001001 | SCCP Message Type | 9 |
| ----0001 | Protocol Class | Class 1 |
| 0000---- | Message Handling | No special options |
| 00000011 | Pointer to parameter | 3 |
| 00001110 | Pointer to parameter | 14 |
| 00011001 | Pointer to parameter | 25 |
| Called address parameter | | |
| 00001011 | Parameter Length | 11 |
| -------0 | Point Code Indicator | PC absent |
| ------1- | Subsystem No. Indicator | SSN present |
| --0100-- | Global Title Indicator | Has transln, n-plan, code, natur |
| -1------ | Routing Indicator | Route on DPC + Subsystem No. |
| 0------- | For national use | 0 |
| 00001000 | Subsystem number | MSC |
| 00000000 | Translation Type | Not used |
| ----0010 | Encoding Scheme | BCD, even number of digits |
| 0001---- | Numbering Plan | ISDN/Telephony (E.164/E.163) |
| -0000100 | Nat. of Address Indicator | International number |
| 0------- | Spare | 0 |
| ***B6*** | Called Address Signals | '491710120000' |
| Calling address parameter | | |
| 00001011 | Parameter Length | 11 |
| -------0 | Point Code Indicator | PC absent |
| ------1- | Subsystem No. Indicator | SSN present |
| --0100-- | Global Title Indicator | Has transln, n-plan, code, natur |
| -0------ | Routing Indicator | Route on Global Title |
| 0------- | For national use | 0 |
| 00001000 | Subsystem number | MSC |
| 00000000 | Translation Type | Not used |
| ----0010 | Encoding Scheme | BCD, even number of digits |
| 0001---- | Numbering Plan | ISDN/Telephony (E.164/E.163) |
| -0000100 | Nat. of Address Indicator | International number |
| 0------- | Spare | 0 |
| ***B6*** | Calling Address Signals | '420603052000' |
| Data parameter | | |
| 00111110 | Parameter length | 62 |
| **B62*** | Data | 64 3c 49 04 fa 04 a8 e5 6b 2a 28 ... |
| 3GPP 29.002 (MAP) Version 4.8.0 (MAP) END (= End) | | |
| End | | |
| 01100100 | Tag | (APPL C [4]) |
| 00111100 | Length | 60 |
| 1 Destination Transaction ID | | |
| 01001001 | Tag | (APPL P [9]) |
| 00000100 | Length | 4 |
| ***B4*** | Dest Trans ID | 4194609381 |
| 2 DialoguePortion | | |
| 01101011 | Tag | (APPL C [11]) |
| 00101010 | Length | 42 |
| 2.1 DialogueExternal | | |
| 00101000 | Tag | (UNIV C External) |
| 00101000 | Length | 40 |
| 2.1.1 DialogueObjectID | | |
| 00000110 | Tag | (UNIV P Obj Identifier) |
| 00000111 | Length | 7 |
| 00000000 | Authority | CCITT Recommendation |
| 00010001 | Name Form | q |
| 10000110 | Rec Number | 7 |
| 00000101 | Rec Number | 73 |
| 00000001 | AS | 1 |
| 00000001 | Dialog-AS | Dialogue PDU |
| 00000001 | Version | 1 |
| 2.1.2 DialoguesingleASN1 | | |
| 10100000 | Tag | (CONT C [0]) |
| 00011101 | Length | 29 |
| 2.1.2.1 DialogueResponse | | |
| 01100001 | Tag | (APPL C [1]) |
| 00011011 | Length | 27 |
| 2.1.2.1.1 Protocol Version | | |
| 10000000 | Tag | (CONT P [0]) |
| 00000010 | Length | 2 |
| 00000111 | UnusedBits | 7 |
| 1------- | Version 1 | Yes |
| -0000000 | Filler | 0 |
| 2.1.2.1.2 Application Context Name | | |
| 10100001 | Tag | (CONT C [1]) |
| 00001001 | Length | 9 |
| 2.1.2.1.2.1 ACN Object Id | | |
| 00000110 | Tag | (UNIV P Obj Identifier) |
| 00000111 | Length | 7 |
| 0000---- | ObjId | CCITT |
| ----0100 | Organization | Identified-organization |
| 00000000 | | ETSI |
| 00000000 | Domain | Mobile Domain |
| 00000001 | Mobile Subdomain | GSM-Network |
| 00000000 | Common Component ID | AC-ID |
| 00010101 | Application Context | Short Msg MO-Relay |
| 00000011 | Version | Version3 |
| 2.1.2.1.3 ResultType | | |
| 10100010 | Tag | (CONT C [2]) |
| 00000011 | Length | 3 |
| 2.1.2.1.3.1 Associate-Result | | |
| 00000010 | Tag | (UNIV P Integer) |
| 00000001 | Length | 1 |
| 00000000 | Associate Result | Accepted |
| 2.1.2.1.4 ResultSourceDiagnostic | | |
| 10100011 | Tag | (CONT C [3]) |
| 00000101 | Length | 5 |
| 2.1.2.1.4.1 DialogueServiceUser | | |
| 10100001 | Tag | (CONT C [1]) |
| 00000011 | Length | 3 |
| 2.1.2.1.4.1.1 Dialogue Service User Value | | |
| 00000010 | Tag | (UNIV P Integer) |
| 00000001 | Length | 1 |
| 00000000 | Dialogue Service User | Null |
| 3 Component Portion | | |
| 01101100 | Tag | (APPL C [12]) |
| 00001000 | Length | 8 |
| 3.1 Return Error | | |
| 10100011 | Tag | (CONT C [3]) |
| 00000110 | Length | 6 |
| 3.1.1 Invoke ID | | |
| 00000010 | Tag | (UNIV P Integer) |
| 00000001 | Length | 1 |
| 00000001 | Invoke ID value | 1 |
| 3.1.2 Local Error | | |
| 00000010 | Tag | (UNIV P Integer) |
| 00000001 | Length | 1 |
| 00100010 | Error Code 3) | System Failure |

### Liste der verwendeten Bezugszeichen und Abkürzungen

- 6-10: (Signalisierungs-) Nachrichten

- 10: MS
- 12: SGSN
- 14: MSC
- 16: VLR
- 18: SMS-IWMSC
- 20: SC (SMS-C)

- GSM: Global System for Mobile Communication
- GPRS: Packet Radio System
- MS: Mobilstation
- SMS: Short Message Service (Kurznachrichtendienst)
- SMS-C: SMS Service Center (Kurznachrichtenzentrale) auch SC
- MSM-MO: SMS-Mobile Originated (von der MS abgehende SMS)
- MSC: Mobile Switching Center (Mobilvermittlungsstelle)
- SMS-IWMSC: SMS Interworking-MSC (SMS-Übergangsvermittlungsstelle)
- MAP: Mobile Application Part (MAP-Schnittstelle)
- IMSI: International Mobile Subscriber Identification (Internationale Mobilteilnehmerkennung)
- MCC: Mobile Country Code (Mobil-Landeskennung)
- MNC: Mobile Network Code (Mobil-Netzwerkkennung
- SGSN: Serving GPRS Support Node (GPRS Vermittlungsstelle)
- VLR: Visitor Location Register (Besucherregister)
- HLR: Home Location Register (Heimatregister)

## Patentansprüche

1. Verfahren zur Zustellung einer Kurznachricht in einem Mobilkommunikationssystem, bei dem die von einer Mobilstation (10) abgesendete Kurznachricht von einem SMS-Service-Center, SMS-C, (20), entgegengenommen und zu eine entsprechenden Empfänger weitergeleitet wird, wobei das SMS-C mittels einer SMS-C Adresse im Mobilkommunikationssystem adressiert wird,
**dadurch gekennzeichnet,**
**dass** eine als fehlerhaft erkannte SMS-C Adresse seitens des Mobilkommunikationssystems korrigiert wird, wobei die fehlerhafte SMS-C Adresse in einer zuständigen Mobilvermittlungsstelle (14) als fehlerhaft erkannt und durch eine gültige, voreingestellte default SMS-C Adresse, ersetzt wird, und die Zustellung der Kurznachricht mit der korrigierten SMS-C Adresse fortgesetzt wird.

2. Verfahren nach Anspruch 1, **dadurch gekennzeichnet, dass** in der Mobilvermittlungsstelle (14) ein Vergleich der SMS-C Adresse mit mehreren in einer Adress-Liste (22) vorgehaltenen gültigen SMS-C Adressen vorgenommen wird, und diese SMS-C Adresse als fehlerhaft erkannt wird, falls sie nicht in der Adress-Liste enthalten ist.

3. Verfahren nach Anspruch 2, **dadurch gekennzeichnet, dass** der Vergleich vor der Zustellung der Kurznachricht an das SMS-Service-Center (20) durchgeführt wird.

4. Verfahren nach einem der Ansprüche 1 bis 3, **dadurch gekennzeichnet, dass** die als fehlerhaft erkannte SMS-C Adresse durch eine vorbestimmte in der Adress-Liste (22) vorhandene, gültige SMS-C Adresse ersetzt wird.

5. Verfahren nach Anspruch 1, **dadurch gekennzeichnet, dass** die fehlerhafte SMS-C Adresse in einer zuständigen Mobilvermittlungsstelle (14, 18) anhand eines dort auftretenden Fehlers oder eines von dem SMS-Service-Center (20) zurückgegebenen Fehlercodes als fehlerhaft erkannt und durch eine gültige SMS-C Adresse ersetzt wird.

6. Verfahren nach Anspruch 5, **dadurch gekennzeichnet, dass** die gültige SMS-C Adresse in der Mobilvermittlungsstelle (14) vorgehalten wird.

7. Verfahren nach einem der Ansprüche 5 oder 6, **dadurch gekennzeichnet, dass** die Kurznachricht mit der korrigierten, durch eine gültige SMS-C Adresse ersetzten SMS-C Adresse erneut an das SMS-Service-Center (20) übermittelt wird.

8. Verfahren nach einem der Ansprüche 5 bis 7, **dadurch gekennzeichnet, dass** die Zustellung der Kurznachricht abgebrochen wird, falls die korrigierte SMS-C Adresse erneut einen Fehler oder Fehlercode erzeugt.

9. Verfahren nach einem der Ansprüche 1 bis 8, **dadurch gekennzeichnet, dass** es nur bei Kurznachrichten von Teilnehmern durchgeführt wird, für die das verwendete Mobilkommunikationssystem das Heimatnetz darstellt.

10. System zur Zustellung einer Kurznachricht in einem Mobilkommunikationssystem nach dem Verfahren der Ansprüche 1 bis 9, umfassend ein SMS-Service-Center, SMS-C, (20) zur Entgegennahme einer von einer Mobilstation (10) abgesendeten Kurznachricht und zur Weiterleitung der Kurznachricht an einen entsprechenden Empfänger, wobei das SMS-C mittels einer SMS-C Adresse im Mobilkommunikationssystem adressiert wird, und eine Mobilfunkvermittlungsstelle **gekennzeichnet dadurch dass** die Mobilfunkvermittlungsstelle (14) eingerichtet ist zur Erkennung einer fehlerhaften SMS-C Adresse und zur Korrektur dieser fehlerhaften SMS-C Adresse durch eine gültige, voreingestellte default SMS-C Adresse und zur Fortsetzung der Zustellung der Kurznachricht mit der korrigierten SMS-C Adresse.

11. Datenverarbeitungsprogramm mit einem Programmcode, der auf einer Datenverarbeitungseinrichtung ausgeführt ein Verfahren nach einem der Ansprüche 1 bis 8 durchführt.

12. Datenverarbeitungsprogrammprodukt, das einen auf einer Datenverarbeitungseinrichtung ausführbaren Programmcode zur Durchführung des Verfahrens nach einem der Ansprüche 1 bis 8 umfasst.

## Claims

1. Method for delivering a short message in a mobile communications system in which the short message sent off by a mobile station (10) is received by an SMS service centre SMS-C (20) and forwarded to a corresponding recipient, wherein the SMS-C is addressed by means of an SMS-C address in the mobile communications system,
**characterised in that** an SMS-C address which is recognised as being incorrect is corrected by the mobile communications system, wherein the incorrect SMS-C address is recognised as being incorrect in an appropriate mobile switching centre (14) and replaced by a valid predetermined default SMS-C address, and the delivery of the short message is continued with the corrected SMS-C address.

2. Method according to claim 1, **characterised in that** in the mobile switching centre (14) the SMS-C address is compared with a plurality of valid SMS-C addresses held in an address list (22) and this SMS-C address is recognised as being incorrect if it is not included in the address list.

3. Method according to claim 2, **characterised in that** the comparison is carried out before the delivery of the short message to the SMS-service centre (20).

4. Method according to one of claims 1 to 3, **characterised in that** the SMS-C address which is recognised as being incorrect is replaced by a predetermined valid SMS-C address present in the address list (22).

5. Method according to claim 1, **characterised in that** the incorrect SMS-C address is recognised as being incorrect in an appropriate mobile switching centre (14, 18) on the basis of an error occurring there or of an error code sent back by the SMS service centre (20), and is replaced by a valid SMS-C address.

6. Method according to claim 5, **characterised in that** the valid SMS-C address is held in the mobile switching centre (14).

7. Method according to one of claims 5 or 6, **characterised in that** the short message with the SMS-C address which was corrected by being replaced by a valid SMS-C address is forwarded to the SMS service centre (20) again.

8. Method according to one of claims 5 to 7, **characterised in that** the delivery of the short message is aborted if the corrected SMS-C address again produces an error or an error code.

9. Method according to one of claims 1 to 8, **characterised in that** it is only carried out in the case of short messages from subscribers for whom the mobile communication system being used is the home network.

10. System for delivering a short message in a mobile communications system according to the method of claims 1 to 9, comprising an SMS service centre SMS-C (20) for receiving a short message sent off by a mobile station (10) and for forwarding the short message to a corresponding recipient, wherein the SMS-C is addressed by means of an SMS-C address in the mobile communications system, and a mobile radio switching centre, **characterised in that** the mobile radio switching centre (14) is set up to recognise an incorrect SMS-C address and to correct this incorrect SMS-C address by a valid predetermined default SMS-C address and to continue the delivery of the short message with the corrected SMS-C address.

11. Data processing programme with a programme code which when executed on a data processing device implements a method according to one of claims 1 to 8.

12. Data processing programme product which comprises a programme code which can be executed on a data processing device for implementing the method according to one of claims 1 to 8.

## Revendications

1. Procédé pour délivrer un message court dans un système de communication mobile, selon lequel le message court envoyé par une station mobile (10) est accepté par un centre de service de SMS, SMS-C, (20) et est retransmis à un destinataire correspondant, le SMS-C étant adressé à l'aide d'une adresse SMS-C dans le système de communication mobile,
**caractérisé en ce qu'**une adresse SMS-C reconnue erronée est corrigée du côté du système de communication mobile, l'adresse SMS-C erronée étant reconnue erronée dans un centre de commutation mobile compétent (14) et étant remplacée par une adresse SMS-C par défaut valable, préréglée, et la délivrance du message court se poursuit avec l'adresse SMS-C corrigée.

2. Procédé selon la revendication 1, **caractérisé en ce que** dans le centre de commutation mobile (14), une comparaison de l'adresse SMS-C avec plusieurs adresses SMS-C valables présentées dans une liste d'adresses (22) est effectuée, et cette adresse SMS-C est reconnue erronée au cas où elle n'est pas contenue dans cette liste d'adresses.

3. Procédé selon la revendication 2, **caractérisé en ce que** la comparaison est effectuée avant la délivrance du message court au centre de service SMS (20).

4. Procédé selon l'une des revendications 1 à 3, **caractérisé en ce que** l'adresse SMS-C reconnue erronée est remplacée par une adresse SMS-C valable prédéfinie qui est présente dans la liste d'adresses (22).

5. Procédé selon la revendication 1, **caractérisé en ce que** l'adresse SMS-C erronée est reconnue erronée dans le centre de commutation mobile (14 18) compétent à l'aide d'une erreur survenue dans celui-ci ou d'un code d'erreur renvoyé par le centre de service SMS (20), et est remplacée par une adresse SMS-C valable.

6. Procédé selon la revendication 5, **caractérisé en ce que** l'adresse SMS-C valable est présentée dans le centre de commutation mobile (14).

7. Procédé selon l'une des revendications 5 ou 6, **caractérisé en ce que** le message court avec l'adresse SMS-C corrigée, remplacée par une adresse SMS-C valable, est transmis une nouvelle fois au centre de service SMS (20).

8. Procédé selon l'une des revendications 5 à 7, **caractérisé en ce que** la délivrance du message court est interrompue au cas où l'adresse SMS-C corrigée génère à nouveau une erreur ou un code d'erreur.

9. Procédé selon l'une des revendications 1 à 8, **caractérisé en ce qu'**il n'est mis en oeuvre que pour les messages courts d'abonnés pour lesquels le système de communication mobile utilisé représente le réseau de rattachement.

10. Système pour délivrer un message court dans un système de communication mobile selon le procédé des revendications 1 à 9, comprenant un centre de service SMS-C, SMS-C, (20) pour accepter un message court envoyé par une station mobile (10) et pour retransmettre le message court à un destinataire correspondant, le SMS-C étant adressé à l'aide d'une adresse SMS-C dans le système de communication mobile,
et un centre de commutation mobile,
**caractérisé en ce que** le centre de commutation mobile (14) est adapté pour reconnaître une adresse SMS-C erronée et pour corriger cette adresse SMS-C erronée par une adresse SMS-C par défaut valable, préréglée, et pour poursuivre la délivrance du message court avec l'adresse SMS-C corrigée.

11. Programme informatique avec un code de programme qui, exécuté sur un dispositif informatique, applique un procédé selon l'une des revendications 1 à 8.

12. Produit de programme informatique qui comprend un code de programme apte à être exécuté sur un dispositif informatique, pour l'application du procédé selon l'une des revendications 1 à 8.
